# EUROPÄISCHE PATENTSCHRIFT

(11) **EP 0 366 894 B1**
(45) Veröffentlichungstag und Bekanntmachung des Hinweises auf die Patenterteilung: **16.06.1993**
(21) Anmeldenummer: 89115684.6
(22) Anmeldetag: 25.08.1989
(51) Int. Cl.: B62D 7/16

(54) **Lenkeinrichtung für lenkbare Räder einer Achse eines Fahrzeugs**
Steering device for the steerable wheels of an axle of a vehicle
Dispositif de direction pour roues directrices d'un axe de véhicule

(30) Priorität: 29.10.1988 DE 3836944
(43) Veröffentlichungstag der Anmeldung: 09.05.1990
(73) Patentinhaber: Bayerische Motoren Werke Aktiengesellschaft, 80788 München (DE)
(72) Erfinder: Mayer, Klaus, D-8050 Freising (DE)

(56) Entgegenhaltungen:
- DE-A- 2 130 957
- DE-A- 3 216 728
- FR-A- 1 237 027
- GB-A- 715 810

## Beschreibung

Die Erfindung betrifft eine Lenkvorrichtung für lenkbare Räder einer Achse eines Fahrzeuges gemäß dem Oberbegriff des Anspruchs 1.

Bei bekannten Lenkeinrichtungen, die ein Lenkgetriebe mit einem schwenkbaren Lenkstockhebel aufweisen, kann sich das Lenkviereck vor oder hinter der Radachse befinden, gleich- oder gegenläufig sein und die inneren Spurstangengelenke können entweder an einer Lenkzwischenstange oder am Lenkstockhebel bzw. Lenkzwischenhebel angeordnet sein. Die Lenkgeometrie eines Lenkviereckes wird unter anderem nach den Kriterien wie kinematische und elastokinematische Anforderungen, Raumangebot, Lenkwinkel der Räder, Spurdifferenzwinkel und ausreichendem Beugewinkel in den Spurstangengelenken bei Strecklagen ausgelegt. Dabei soll der Spurdifferenzwinkelverlauf einer "Ackermannkurve" zumindest in den Endlagen möglichst nahekommen und ferner soll der Beugewinkel so gewählt sein, daß ein Überschnappen der äußeren Spurstangengelenke beim maximalen Radeinschlag vermieden wird. Diese Kriterien werden bei hinter der Radachse liegendem Lenkgestänge durch gleichläufige Lenkvierecke erfüllt. Bei gegenläufigen Lenkvierecken mit hinter der Radachse liegendem Lenkgestänge ist es zur Erfüllung der genannten Kriterien erforderlich, daß die inneren Spurstangengelenke jeweils direkt am Lenkstockhebel bzw. am Lenkzwischenhebel angreifen.

Aus der DE-OS 32 16 728 ist bereits ein gegenläufiges Lenkviereck bekannt, bei dem die inneren Spurstangengelenke unmittelbar am Lenkstockhebel bzw. am Lenkzwischenhebel angelenkt sind. Diese bekannte Lenkeinrichtung erfüllt die oben genannten Kriterien. Sie hat jedoch den Nachteil, daß die Lage des Lenkgetriebes und des daran angeordneten Lenkstockhebels durch die vorgegebenen räumlichen Verhältnisse, wie zum Beispiel die Lage des dazugehörigen inneren Spurstangengelenkes festgelegt ist. Aufgrund der zwangsläufigen Zuordnung des Lenkstockhebels bzw. des Lenkzwischenhebels zur Lenkzwischenstange ist keine Querverschiebung des Lenkstockhebels möglich. Dies führt dazu, daß bei einem geringen Platzangebot zur Unterbringung des Lenkgetriebegehäuses erhebliche konstruktive Änderungen erforderlich sind. Diese zwangsläufige Zuordnung wird insbesondere dann zu einem Problem, wenn das Lenkgetriebegehäuse des hintenliegenden Lenkviereckes noch weiter nach hinten und zur Seite hin verschoben werden muß, um für seitliche Abtriebswellen, die im Bereich um die Radmitte herum jeweils angeordnet sind, Platz zu schaffen. Diese Umstände führen dazu, daß sich bei gegebener Karosserieträgerbreite bzw. Karosserieträgerlage oftmals räumliche Überdeckungen ergeben.

Aus der DE-A 812508 ist eine Lenkung für Kraftfahrzeuge bekannt, aus der alle im Oberbegriff des neuen Anspruchs 1 definierten Merkmale hervorgehen. Nachteilig bei der bekannten Lenkung ist, daß die Lage der jeweiligen Spurstange durch die Radaufhängung bestimmt ist. Damit ist auch die Lage des jeweiligen Gelenks des Spurhebels festgelegt, über das der Spurhebel mit der Spurstange verbunden ist. Die Lage des Spurhebels bestimmt jedoch die Position des Lenkgetriebes. Durch die festgelegte Lage des Lenkgetriebes kann es zu Problemen bei der Anordnung beispielsweise des Motorträgers, des Motors, der Auspuffanlage und der Lenksäule kommen.

Aufgabe der Erfindung ist es, eine Lenkeinrichtung für lenkbare Räder einer Achse eines Fahrzeuges zu schaffen, bei der die Lage des Lenkgetriebegehäuses zumindest in Fahrzeugquerrichtung innerhalb vorgegebener Grenzen wählbar ist.

Diese Aufgabe wird erfindungsgemäß durch die Merkmale des kennzeichnenden Teils des Anspruchs 1 gelöst.

Durch die erfindungsgemäße Lenkeinrichtung wird erreicht, daß die Lenkgetriebegehäuselage von der Lage der inneren Spurstangengelenke unabhängig ist, so daß die Lage des Lenkgetriebegehäuses kinematisch frei wählbar ist. Ferner ist die erfindungsgemäße Lenkeinrichtung vorteilhaft in der Serienfertigung anwendbar, da die Modellreihe eines Kraftfahrzeuges ohne größerer Änderungen mit oder ohne Allradantrieb versehen werden kann. Von Vorteil ist auch, daß ein kleiner Wendekreis bei akzeptablen Beugewinkeln in den Spurstangengelenken erreicht wird. Schließlich ist die Lenkeinrichtung in Kombination mit allen lenkbaren Radaufhängungen anwendbar.

Vorteilhafte Ausgestaltungen der erfindungsgemäßen Lenkeinrichtung werden in den Unteransprüchen beschrieben.

Ausführungsformen der erfindungsgemäßen Lenkeinrichtung werden anhand der nachfolgenden Zeichnungen beispielshalber beschrieben. Dabei zeigen:
- Figur 1: eine Draufsicht auf eine Vorderachse eines Fahrzeuges, in der eine Ausführungsform der Lenkeinrichtung schematisch dargestellt ist,
- Figur 2: eine Draufsicht auf eine Vorderachse eines Fahrzeuges, in der das Lenkgetriebegehäuse in Fahrzeug-Querrichtung verschoben ist,
- Figur 3: eine weitere Draufsicht auf eine Vorderachse eines Fahrzeuges, in der der Lenkzwischenhebel in Fahrzeuglängsrichtung nach hinten verschoben ist,
- Figur 4: eine perspektivische Ansicht einer Vorderachse von hinten, in der eine räumliche Anordnung der Drehachsen des Lenkstockhebels bzw. des Lenkzwischenhebels gezeigt ist.

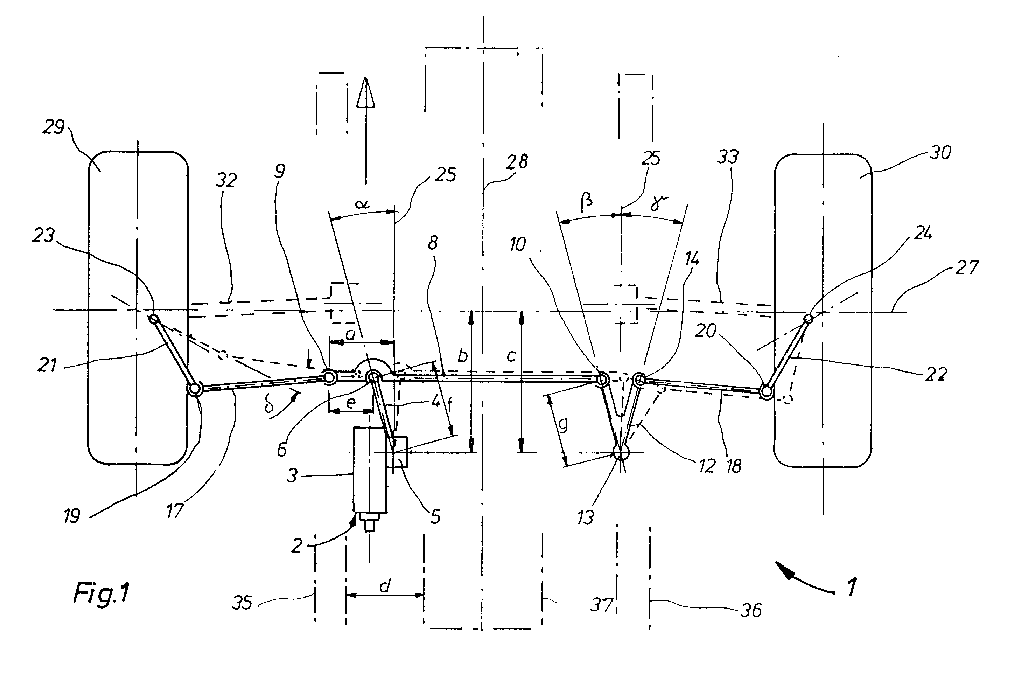

In der Figur 1 ist die Vorderachse 1 eines Kraftfahrzeuges mit lenkbaren Rädern 29 und 30 dargestellt. Wie ersichtlich, ist das Lenkviereck nach hinten verschoben, um Platz für Antriebswellen 32 und 33 zu schaffen. Die in der Figur 1 abgebildete Ausführungsform ist ein gegenläufiges Lenkviereck mit einem nach vorne gerichteten Lenkstockhebel 4 und einem ebenfalls nach vorne gerichteten Lenkzwischenhebel 12, die miteinander durch eine Lenkzwischenstange 8 verbunden sind. Der Lenkstockhebel 4 ist an einem Lenkgetriebegehäuse 3 über ein Gelenk 5 verbunden, das die Drehachse des Lenkstockhebels 4 ist. Der Lenkstockhebel 4 ist über ein Zapfengelenk 6 oder dergleichen mit der in der Draufsicht parallel zur Fahrzeugquerachse liegenden Lenkzwischenstange 8 verschwenkbar verbunden. Der Lenkstockhebel 4 ist in der Draufsicht in der Geradeausstellung der Räder 29 und 30 in Bezug auf eine Längsachse 25 des Fahrzeuges in Richtung des Rades 29 um einen Winkel α gedreht. Die Größe des Winkels α ist abhängig von einem noch zulässigen Beugewinkel δ der beim maximalen Radeinschlag zwischen einem Spurhebel 21 bzw. 22 und einer daran angelenkten Spurstange 17 bzw. 18 auftritt. Beabstandet von dem Zapfengelenk 6 ist in Richtung des Rades 29 die Spurstange 17 über ein Kugelgelenk 9 oder dergleichen mit der Lenkzwischenstange 8 verbunden. Am gegenüberliegenden Ende der Spurstange 17 befindet sich ein weiteres Gelenk 19, das die Spurstange 17 mit dem Spurhebel 21 verbindet. Der Spurhebel 21 ist an einem Radträger 23 befestigt, der die aufgebrachten Lenkkräfte auf das Rad 29 überträgt und dieses um die Lenkungsdrehachse dreht, bis der gewünschte Lenkeinschlagwinkel erreicht ist. Die Lenkzwischenstange 8 ist an ihrem gegenüberliegenden Ende über ein Zapfengelenk 10 oder dergleichen mit dem Lenkzwischenhebel 12 verbunden, der sich um eine Drehachse 13 drehen kann. In der in Figur 1 gezeigten Ausführungsform ist der Lenkzwischenhebel V-förmig ausgebildet, wobei sich an dem einen Arm das Zapfengelenk 10 befindet und an dem davon beabstandeten gleichlangen Arm ein Kugelgelenk 14 oder dergleichen angeordnet ist, das den Lenkzwischenhebel 12 gelenkig mit der Spurstange 18 verbindet. Die Spurstange 18 ist über ein Gelenk 20 mit dem Spurhebel 22 verbunden, der an einem Radträger 24 befestigt ist.

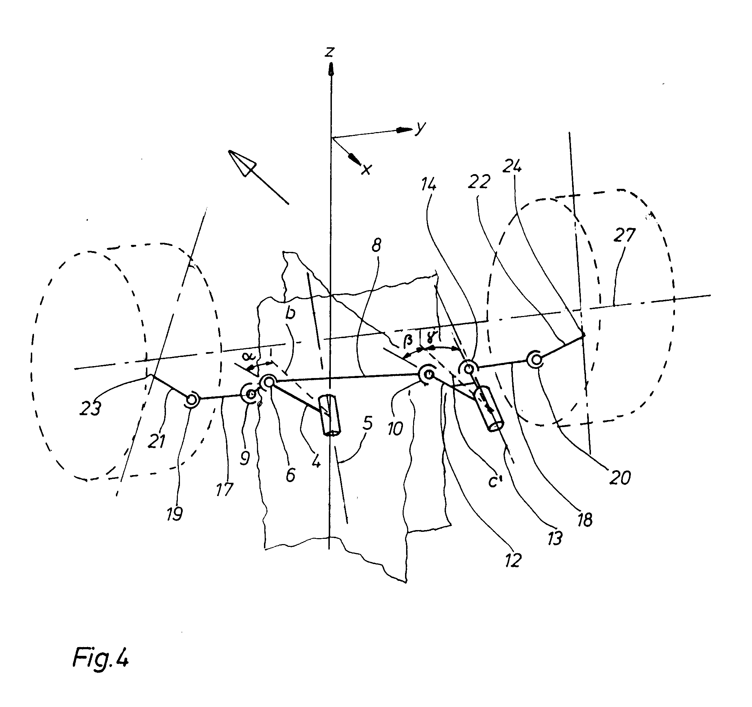

Eine durch das Zapfengelenk 10 und die Drehachse 13 gehende Verbindungslinie bildet mit einer Längsachse 25 des Fahrzeuges, die durch die Drehachse 13 verläuft, einen Winkel β , der in Betrag und Richtung in etwa dem Winkel α entspricht, so daß sich der Lenkstockhebel 4 parallel zu dem durch das Zapfengelenk 10 und die Drehachse 13 gebildeten Arm des Lenkzwischenhebels bewegt. Zwischen der Längsachse 25 und der Verbindungslinie zwischen der Drehachse 13 und dem Kugelgelenk 14 liegt ein Winkel γ , der im Betrag dem Winkel α entspricht, jedoch spiegelbildlich zu diesem in Richtung des Rades 30 gedreht ist. Bei einer räumlichen Anordnung der Drehachsen 5 und 13, wie dies in der Figur 4 gezeigt ist, unterscheiden sich die Winkel α und β in der Geradeausstellung der Räder 29 und 30 um circa bis zu 1 °, um nahezu identische Drehbewegungen der inneren Spurstangengelenke 9 und 14 im gelenkten Zustand zu erreichen. Die Winkel α , β und γ liegen in einem Bereich zwischen 15 bis 20 °.

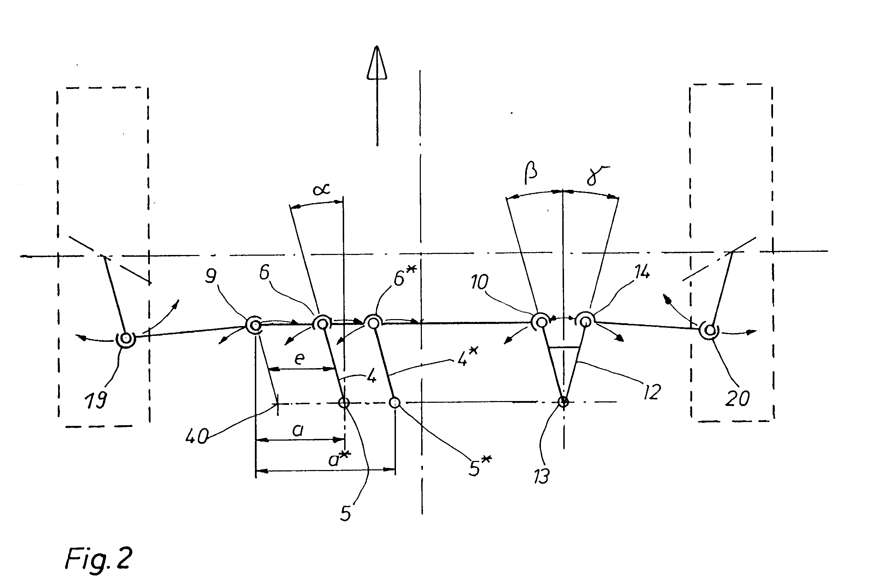

Aus Auslegungsgründen ist die Lage des Gelenkes 9 in Fahrzeugquerrichtung festgelegt. Im Unterschied zu bekannten Gelenkvierecken ist jedoch in Querrichtung der Abstand a zwischen dem Kugelgelenk 9 und der Drehachse 5 beim vorliegenden Lenkviereck innerhalb der vorgegebenen räumlichen Verhältnisse frei wählbar. Diese vorgegebenen räumlichen Verhältnisse können zum Beispiel auf der einen Seite durch den Motorträger 35 und auf der anderen Seite durch den Motor 37 begrenzt sein. Die Motorträger 35 und 36, sowie der für den Motor 37 erforderliche Raum sind in der Figur 1 durch strichpunktierte Linien angedeutet. Durch die Ausbildung eines Parallelogrammes mit gleich langen Hebelarmen f und g des Lenkstockhebels 4 bzw. des Lenkzwischenhebels 12, sowie des gleichen Abstandes zwischen den Zapfengelenken 6 und 10 und zwischen den Drehachsen 5 und 13 ergibt sich bei jeder Lenkbewegung wieder ein Parallelogramm. Gleichzeitig bleibt die kreisförmige Bewegungsbahn des Gelenkes 9 erhalten, da der Radius und der in Figur 2 dargestellte Mittelpunkt 40 der Kreisbahn des Gelenkes 9 gleich bleibt. Der Mittelpunkt 40 dieses Kreises liegt in der Ausführungsform der Figuren 1 und 2 auf der in der Draufsicht parallel zur Querrichtung liegenden Verbindungslinie zwischen den Drehachsen 5 und 13 und ist von der Drehachse 5 in Richtung des Rades 29 um die Strecke e beabstandet, die sich in Querrichtung aus dem Abstand zwischen dem Gelenk 9 und dem Gelenk 6 ergibt.

In der Figur 2 sind die kreisförmigen Bewegungsbahnen der einzelnen Gelenke durch Pfeile dargestellt. Die neue Lage des in Querrichtung verschobenen Lenkstockhebels 4 ist durch die mit einem Stern versehenen Bezugszeichen 5* und 6* sowie aus dem mit einem Stern versehenen Buchstaben a*, für den Abstand zwischen dem Gelenk 9 und dem Gelenk 5 in Querrichtung gekennzeichnet. Wie ferner aus der Figur 2 hervorgeht behalten die übrigen Gelenke ihre ursprüngliche Lage bzw. Bewegungsbahn bei.

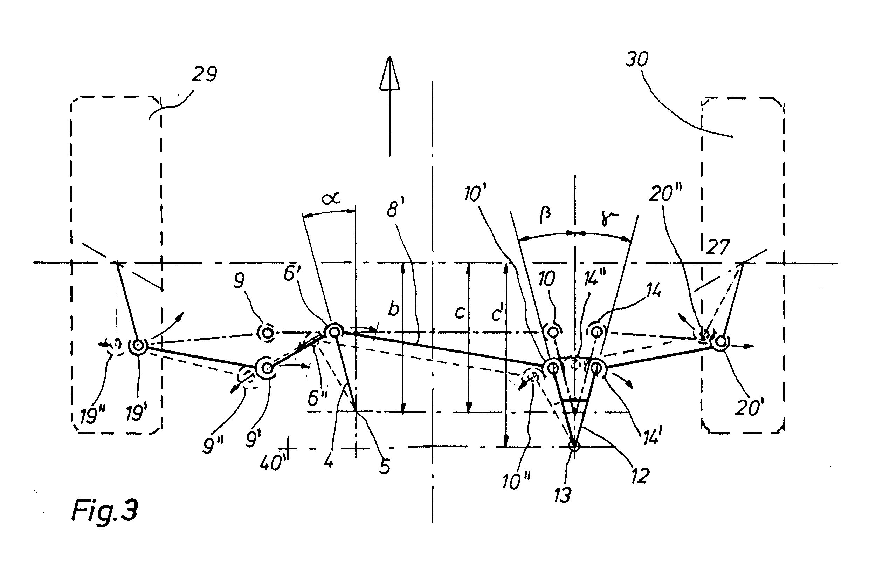

In der Figur 3 ist die Verschiebbarkeit des Lenkzwischenhebels 12 in Fahrzeuglängsrichtung gezeigt. Die Längsverschiebung des Lenkzwischenhebels 12 erfolgt entlang der räumlich angeordneten Drehachse 13 unter Beibehaltung der Winkel β und γ . Im Unterschied zu der in den Figuren 1 und 2 gezeigten Ausführungsform bewegt sich nunmehr die Lenkzwischenstange 8 schräg zur Fahrzeugquerrichtung. Aus kinematischen Symmetriegründen nimmt das Gelenk 9′ die gleiche Längslage ein wie das Gelenk 14′. Zur Vermeidung von Taumelbewegungen des Gelenkes 9′ um die Lenkzwischenstange 8 ist es erforderlich die Gelenke 6′ oder 10′ als Zapfengelenk auszuführen. Das Gelenk 10′ muß dabei nicht die gleiche Höhenlage einnehmen wie das Gelenk 14′. Durch gestrichelte Linien ist eine Auslenkung des Lenkstockhebels 4 in Richtung des Rades 29 gezeigt. Dabei ist erkennbar, daß sich das Gelenk 9′ mit einem Radius, der dem Abstand f zwischen den Gelenken 5 und 6′ entspricht, um einen Mittelpunkt 40′ dreht. Die Lage des Mittelpunktes 40′ kann dadurch ermittelt werden, daß die zwischen den Gelenken 9′ und 6′ liegende Strecke parallel verschoben wird, bis sie am einen Ende am Gelenk 5 angelangt ist. Das andere Ende der Strecke 9′, 6′ ergibt die Lage des Mittelpunktes 40′.

In der Figur 4 ist die räumliche Anordnung der Drehachse des Lenkstockhebels 4 sowie die räumliche Anordnung der Drehachse 13 des Lenkzwischenhebels 12 dargestellt. Die Lenkzwischenstange 8 ist räumlich schräg angeordnet, so daß eine Differenz zwischen dem Winkel α und β zur Erzielung nahezu identischer Drehbewegungen der inneren Spurstangengelenke erforderlich ist.

Neben der in den Figuren 1 bis 4 gezeigten Ausführungsform eines hinter die Radachse 27 verschobenen Lenkviereckes mit einem nach vorne gerichteten Lenkstockhebel 4 und einem nach vorne gerichteten Lenkzwischenhebel 12, ist es auch möglich den Lenkstockhebel 4 und den Lenkzwischenhebel 12 nach hinten auszurichten.

## Patentansprüche

1. Lenkeinrichtung für lenkbare Räder einer Achse (1) eines Fahrzeugs, insbesondere einer Vorderachse (1) mit einem Lenkgetriebe (2), das einen Lenkstockhebel (4) verschwenkt, der über eine Lenkzwischenstange (8) mit einem Lenkzwischenhebel (12) verbunden ist, wobei die Lenkkräfte über den Lenkstockhebel (4), die Lenkzwischenstange (8) und den Lenkzwischenhebel (12) über zwei mit diesen in Verbindung stehende Spurstangen (17, 18) zu den Spurhebeln (21, 22) der Radträger weitergeleitet werden,
wobei der Lenkstockhebel (4) über ein Gelenk (6), mit der Lenkzwischenstange (8) verbunden ist und bei Geradeausfahrt in Richtung des über die erste Spurstange (17) gelenkten ersten Rades (29) in der Draufsicht einen Winkel α zu einer Längsachse (25) des Fahrzeuges bildet,
wobei die gegenüberliegende zweite Spurstange (18) über ein erstes Gelenk (14) an dem um eine ortsfeste Drehachse (13) verschwenkbaren Lenkzwischenhebel (12) angelenkt ist, der bei Geradeausfahrt in Richtung des über die zweite Spurstange (18) gelenkten zweiten Rades (30) in der Draufsicht einen Winkel γ zu einer Längsachse (25) des Fahrzeuges bildet, der im Betrag ungefähr dem Winkel α entspricht,
wobei der Lenkzwischenhebel (12) ein zweites Gelenk (10) aufweist, das von dem ersten Gelenk (14) für die zweite Spurstange (18) beabstandet ist und
wobei in der Draufsicht gesehen ein Abstand f zwischen einer am Lenkgetriebe (2) ausgebildeten Drehachse (5) und dem Gelenk (6) des Lenkstockhebels (4) ungefähr gleich ist einem Abstand g zwischen der Drehachse (13) und dem zweiten Gelenk (10) des Lenkzwischenhebels (12),
dadurch gekennzeichnet,
- daß die erste Spurstange (17) über ein weiteres Gelenk (9) mit einem Ende der Lenkzwischenstange (8) verbunden ist und
- daß ein Arm des Lenkzwischenhebels (12) mit dem zweiten Gelenk (10) bei Geradeausfahrt in Richtung des über die gegenüberliege erste Spurstange (17) gelenkten Rades (29) in der Draufsicht einen Winkel β zu einer Längsachse (25) des Fahrzeuges bildet, der im Betrag ungefähr dem Winkel α entspricht wobei der Lenkzwischenhebel (12) über das zweite Gelenk (10) mit der Lenkzwischenstange (8) verbunden ist.

2. Lenkeinrichtung nach Anspruch 1, dadurch gekennzeichnet, daß sich der Winkel β zum Winkel α um circa bis zu 1° unterscheidet.

3. Lenkeinrichtung nach Anspruch 1 oder 2, dadurch gekennzeichnet, daß die Winkel α, β und γ in einem Bereich zwischen circa 15 bis 20° liegen.

## Claims

1. A steering device for the steerable wheels of an axle (1) of a vehicle, more especially a front axle comprising a steering gear (2) which pivots a drop arm (4) connected via an intermediate steering rod (8) to an intermediate steering lever (12), the steering forces being transmitted via the drop arm (4), the intermediate steering rod (8) and the intermediate steering lever (12) and via two track rods (17, 18) connected thereto, to the steering arms (21, 22) of the wheel carrier,
the drop arm (4) being connected to the intermediate steering rod (8) by a joint (6) and, during travel straight forward, being at an angle α to a longitudinal axis (25) of the vehicle in plan view in the direction of the first wheel (29) steered via the first track rod (17),
the opposite or second track rod (18) being pivoted via a first joint (14) to the intermediate steering lever (12) which is pivotable around a stationary axis (13) and which, during travel straight forward, is at an angle γ approximately equal to the angle α to a longitudinally axis (25) of the vehicle in plan view, in the direction towards the second wheel (30) pivoted via the second track rod (18),
the intermediate steering lever (12) comprising a second joint (10) at a distance from the first joint (14) for the second steering arm (18) and
in plan view the distance f between the joint (6) of the drop arm (4) and an axis of rotation (5) on the steering gear (2) is approximately equal to the distance g between the axis of rotation (13) and the second joint (10) of the intermediate steering lever,
characterised in that
the first steering arm (17) is connected via an additional joint (9) to one end of the intermediate steering rod (8), and
during travel straight forwards, an arm of the intermediate steering lever (12) comprising the second joint (10) is at an angle β to a longitudinal axis (25) of the vehicle in plan view in the direction of the wheel (29) steered via the opposite first track rod (17), the angle β being approximately equal to the angle α , and the intermediate steering lever (12) is connected via the second joint (10) to the intermediate steering rod (8).

2. A steering device according to claim 1,
characterised in that the angle β differs from the angle α by up to about 1°.

3. A steering device according to claim 1 or 2,
characterised in that the angles α, β and γ are in a range between about 15 and 20°.

## Revendications

1. Dispositif de direction pour des roues directrices d'un axe (1) d'un véhicule, en particulier d'un essieu avant (1) avec un mécanisme de direction (2), qui fait pivoter un levier de direction (4), qui est relié par une barre intermédiaire de direction (8) à un levier intermédiaire de direction (12), dispositif dans lequel les forces de braquage sont transmises par le levier de direction (4), la barre intermédiaire de direction (8) et le levier intermédiaire de direction (12) via deux barres d'accouplement (17, 18), se trouvant en liaison avec celles-ci, aux leviers d'accouplement (21, 22) des supports de roue,
dispositif dans lequel le levier de direction (4) est relié au moyen d'une articulation (6) à la barre intermédiaire de direction (8) et quand le véhicule marche en ligne droite forme en direction de la première roue (29) dirigée par l'intermédiaire de la première barre d'accouplement (17), en vue de dessus, un angle α par rapport à un axe longitudinal (25) de véhicule,
dispositif dans lequel la deuxième barre d'accouplement en regard (18) est articulée au moyen d'une première articulation (17) sur le levier intermédiaire de direction (12) pouvant pivoter autour d'un axe de rotation (13) à poste fixe, qui forme lorsque le véhicule marche en ligne droite, dans la direction de la deuxième roue (30) dirigée par la deuxième barre d'accouplement (18), en vue de dessus, un angle γ par rapport à un axe longitudinal (25) du véhicule, qui correspond en amplitude environ à l'angle α,
dispositif dans lequel le levier intermédiaire de direction (12) présente une deuxième articulation (10), qui est située à une certaine distance de la première articulation (14) pour la deuxième barre d'accouplement (18) et
dispositif dans lequel sur la vue de dessus une distance f entre un axe de rotation (5) formé sur le mécanisme de direction (2) et l'articulation (6) du levier de direction (4) est environ la même qu'une distance g comprise entre l'axe de rotation (13) et la deuxième articulation (10) du levier intermédiaire de direction (12),
dispositif de direction caractérisé en ce que :
- la première barre d'accouplement (17) est reliée par une autre articulation (9) à une extrémité de la barre intermédiaire de direction (8) et,
- un bras du levier intermédiaire de direction (12) forme avec la deuxième articulation (10), quand le véhicule marche en ligne droite, dans la direction de la roue (29) dirigée par la première barre d'accouplement située en regard (17), en vue de dessus, un angle β par rapport à un axe longitudinal (25) du véhicule, angle qui correspond environ en amplitude à l'angle α, le levier intermédiaire de direction (12) étant relié par l'intermédiaire de la deuxième articulation (10) à la barre intermédiaire de direction (8).

2. Dispositif de direction selon la revendication 1, caractérisé en ce que l'angle β est différent de l'angle α d'une amplitude allant environ jusqu'à 1°.

3. Dispositif selon la revendication 1 ou 2, caractérisé en ce que les angles α, β et γ se trouvent dans une plage d'environ 15 à 20°.
